# EUROPEAN PATENT SPECIFICATION

(11) **EP 2 955 902 B1**
(45) Date of publication and mention of the grant of the patent: **22.08.2018**
(21) Application number: 15171485.4
(22) Date of filing: 10.06.2015
(51) Int. Cl.: H04L 29/08, H04L 29/06

(54) **MONITORING OF USER TERMINALS SUITABLE FOR RECEIVING SIGNALS FROM COMMUNICATION NETWORKS**
ÜBERWACHUNG VON BENUTZERENDGERÄTEN GEEIGNET IST ZUM EMPFANGEN VON SIGNALEN VON KOMMUNIKATIONSNETZWERKEN
SURVEILLANCE DE TERMINAUX D'UTILISATEUR ADAPTÉ POUR RECEVOIR DES SIGNAUX À PARTIR DE RÉSEAUX DE COMMUNICATION

(30) Priority: 10.06.2014 IT MI20141061
(43) Date of publication of application: 16.12.2015
(73) Proprietor: Sky Italia S.R.L., 20138 Milano (IT)
(72) Inventor: Galeone, Giuseppe, 20138 Milano (IT)
(74) Representative: Hoffmann Eitle

(56) References cited:
- US-A1- 2008 117 869
- US-A1- 2011 219 096
- US-A1- 2011 306 337
- US-A1- 2013 159 494
- US-A1- 2013 290 925
- US-B1- 6 903 728
- US-B1- 7 028 228

## Description

The present invention refers to the monitoring of a terminal, particularly to the monitoring of at least one terminal suitable for receiving signals from a communication network.

### BACKGROUND OF THE INVENTION

At present, there are existing technologies that allow to collect information regarding the use that users make of television. For example, information can be collected concerning the channels and programmes viewed by users and/or information on the users themselves and their interaction with television terminals (e.g. Auditel). Information can be collected on the use of the remote control, for example which buttons are pressed and in what sequence. Other technologies refer to surrounding audio detection by means of a mini-microphone located near the television and to recognition of users seated in front of a television, using a camera and face-recognition techniques.

The information regarding interaction between the user and the television (details on channels and programmes, sequences of buttons pressed by the user, etc.) can be potentially collected and transported from the user's home to an external database. Existing prior-art technology such as the Internet and the GSM/GPRS mobile network can be used for transporting this information.

However, the information consists of seemingly unrelated data that are difficult to interpret. For this reason, it is impossible to read these data, interpret them as a set and produce one or more actions as a result. There is no existing software, hardware equipment or any other technological device that is capable of processing such a large amount of data and providing for simple but effective monitoring of the operation of a terminal that supplies content to the user and interacts with the user as well.
US 6,903,728 B1 relates to a Soft-labeled keys (SLKs) of a wireless terminal or other type of terminal in a communication system controlled in an efficient manner using a state-based control model. In an illustrative embodiment, a state machine is generated such that each state in the state machine specifies a set of labels for a corresponding set of soft-labeled keys associated with the wireless terminal. At least a portion of the state machine is downloaded from a switch of the system, and processed to generate a display including a given one of the sets of labels. The state machine may be in the form of a state transition table which includes, for each state, (i) a set of labels for the set of soft-labeled keys, (ii) a set of feature identifiers, e.g., system codes, each identifying, for a given one of the labels, a particular feature supported by the switch, and (iii) a next state which is entered when the corresponding soft-labeled key is selected by the user. After a given one of the soft-labeled keys is selected by a user, the corresponding feature identifier is transmitted from the wireless terminal to the switch. The state transition table may also support a local mode in which selecting a particular SLK in a given state causes the terminal to execute a specified local program, after which the terminal returns to the given state. Updating of the display may be controlled locally by the wireless terminal, or by the switch sending an indication of the next state to the wireless terminal.

### SUMMARY OF THE INVENTION

The object of the present invention is to overcome the problems related to the prior-art techniques of monitoring a terminal for receiving signals from a communication network.

The object of the invention is achieved by the subject-matter of the independent claims. Advantageous embodiments are defined in the dependent claims. Further examples are provided for facilitating the understanding of the invention.

A first aspect comprises a method for monitoring at least one terminal suitable for receiving signals from a communication network. The method comprises a step of associating at least one portion of operating conditions of the terminal with a state machine model comprising a plurality of states and a plurality of transitions between said plurality of states, where one or more states preceding one of said plurality of transitions are input states of said transition and a state subsequent to said transition is an output state of said transition, wherein each one of said input states is such as to assume an active or inactive state. Moreover, the method comprises associating at least one among a user input signal and a user output signal of said terminal with each one of said plurality of transitions, and triggering one of said plurality of transitions when the input states relative to this transition are in the active state, upon the at least one signal among a user input signal and a user output signal of said terminal. The method then comprises generating an event corresponding to at least one of the triggered transitions.

A second aspect comprises a program for monitoring at least one terminal suitable for receiving signals from a communication network, the program being apt for executing, when said program is run on a computer, all the steps according to the method described hereinabove.

A third aspect comprises an entity for monitoring at least one terminal suitable for receiving signals from a communication network, the entity comprising first association means, second association means, transition means and generating means.
The first association means is configured to associate at least one portion of operating conditions of the terminal with a state machine model comprising a plurality of states and a plurality of transitions between said plurality of states, where one or more states preceding one of said plurality of transitions are input states of said transition and a state subsequent to said transition is an output state of said transition, wherein each one of said input states is such as to assume an active or inactive state.

The second association means is configured to associate at least one among a user input signal and a user output signal of said terminal with each one of said plurality of transitions.
The transition means is configured to trigger one of said plurality of transitions when the input states relative to this transition are in the active state, upon the at least one signal among a user input signal and a user output signal of said terminal.
The generating means is configured to generate an event corresponding to at least one of the triggered transitions.

### LIST OF FIGURES

Figure 1 is a flow chart of a method for monitoring a terminal suitable for receiving signals from a communication network according to a first embodiment.
Figure 2 is a block diagram of an entity for monitoring a terminal suitable for receiving signals from a communication network.
Figure 3 is a flow chart of a method for allocating a band in a communication system according to a second embodiment.
Figure 4 is a flow chart of a method for modifying a configuration of at least one terminal that is suitable for receiving signals from a communication network.
Figure 5 is an example of the operation of a Petri net.
Figure 6 is an example of a transition in a Petri net.

### DETAILED DESCRIPTION

The monitoring of a terminal, for example a television signal decoder, and the monitoring of the interaction between a terminal and a user are important factors involving a variety of technical issues. For example, precise monitoring of the terminal and of user-terminal interaction allows for an accurate understanding of the current operating state of the terminal. Moreover, it can make it possible to reconfigure the terminal or the network efficiently so as to decrease the workload of the terminal or the network. For example, the terminal can be reconfigured so as to make it faster and more efficient for the user to use, that is, in order to improve machine-user interaction. Higher speed and efficiency in the use of the terminal allows for a decrease in data processing by the terminal and thus improves its computational efficiency. For example, several areas of the electronic programme guide (EPG) can also be reconfigured automatically based on factors such as the number of accesses to the area and the navigation path selected by the user for access to the area. Furthermore, monitoring of user-terminal interaction allows for more efficient distribution of the satellite transmission band allocated to interactive applications.

The inventors have devised a means for efficient monitoring of a terminal suitable for receiving signals from a communication network. This terminal receives signals from a communication network that can consist of a satellite network, a wireless network or a fixed network. The terminal can consist of a decoder, for example a digital satellite decoder, an electronic device capable of receiving satellite signals, or a device (e.g. a computer, tablet, smartphone, etc.) connected to the Internet by means of a fixed or wireless network.

By means of the definition of a state machine model, the invention allows to monitor and/or reconstruct the operating state or various operating states of the terminal in a precise, reliable and efficient manner. It is also possible to monitor interaction between the user and the terminal. It should be noted that although it can at least partially reproduce the operation of the terminal (and therefore of a state machine followed by the terminal in its operation), the state machine model is a model that is separate from the terminal at least logically or even physically. As shall be clarified also herein below, for example, the state machine model can be implemented in a device that is physically separate from the terminal to be monitored. Therefore, accurate monitoring can be carried out without being invasive on the terminal to be monitored. This decoupling can also be logical and not necessarily physical. For example, the model can be implemented in the terminal, but the input and output signals of the model, as well as the stimuli (see those needed to carry out the transitions), are supplied directly to the model (for example by means of hardware connections between the terminal input/output and the model) without having to modify the terminal software and/or terminal software/hardware interaction. Although apparent from the rest of the present description, it should be noted that the state machine model for monitoring is implemented in an entity that is separate (considered logically or physically) from the terminal. Therefore, the state machine model utilized by the monitoring entity is separate from a possible state machine model possibly utilized by the terminal for controlling the same. The fact that the state machine model for monitoring (or the state machine for monitoring) can contain part or all of the states of the state machine model (or of the state machine) for controlling, does not alter the fact that it is separate from it. Moreover, this does not exclude that the state machine model for monitoring (included in the entity) may contain states other than those contained in the state machine for controlling or operating the terminal.

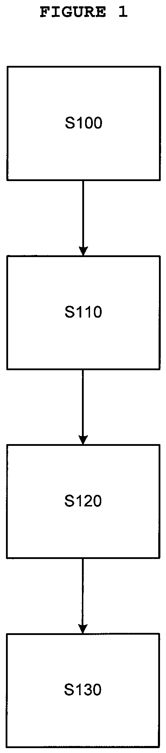

With reference to Figure 1, a first embodiment of the invention will be described concerning a method for monitoring at least one terminal suitable for receiving signals from a communication network. The signal includes content, typically at least one video service; however, the signal can also comprise at least one service among an audio service and a data service (e.g. data for the user, an application and/or data for the application) and/or additional video/audio/data services.

In step S100, the method associates at least one portion of operating conditions of the terminal with a state machine model comprising a plurality of states and a plurality of transitions between said plurality of states. The operating conditions of the terminal can comprise a television channel to which the user can tune (or is currently tuned) or a currently selected EPG page. The operating conditions can also comprise the state of activation of a terminal warning light (e.g. the on/off state of a LED). The transitions between these states take place based on specific conditions as explained below. The state machine model can for example comprise a Petri net or a directed graph. Associating at least one portion of operating states of the terminal means that although it is not necessary to model all possible operating states of the terminal, it is possible to select a subset thereof: for example, only some of the states held to be of interest, such as some critical operating states. The selection of the subset of states to be monitored may also make it necessary to include intermediate states of transition in the subset as well. Although they may not coincide with the states to be monitored, these intermediate states of transition can be useful or necessary for modelling the states to be monitored (e.g. intermediate states through which the terminal must pass in order to reach a state to be monitored).

One or more preceding states, with respect to one of said plurality of transitions, represent input states of said transition and a state subsequent to said transition represents an output state of said transition. The term "preceding" for a state A in relation to a state B indicates that the terminal cannot typically pass into state B without the terminal being at least in state A. Each one of said input states is such as to assume an active or inactive state. A state is active when the terminal is in that operating state, for example the terminal is started or as a result of a preceding operation or as a result of a preceding state transition. The active state can coincide with a current state, in the sense of a state of the terminal at the moment, for example a state corresponding to the displaying of an EPG page selected by the user or to the television channel to which the user is tuned. In the case in which the state machine model is a Petri net, the active state is identified as a state containing a token, as explained below.

In step S110, the method associates at least one among a user input signal and a user output signal of said terminal with each one of said plurality of transitions. The user input signal refers to a signal generated or sent by the user to the terminal, and it can consist for example of a signal generated when the user presses a button on a remote control, a button on the front panel of the terminal, a key (physical or virtual) on any device by means of which the terminal can be operated (e.g. a key on a display screen integrated in or connected to the terminal), etc. It should be noted that the terminal and the device for operating it can be integrated in the same equipment. The user output signal refers to a signal emitted by the terminal to the user, for example addressed to the attention of the user of the terminal, and it comprises for example a LED signal on the front panel of the decoder, a signal displayed on a display of a smart remote control, for example a tablet or smartphone, or on the screen to which the terminal is connected.

In step S120, the method triggers one of said plurality of transitions when the input states relative to this transition are in the active state, upon at least one among a user input signal and a user output signal of said terminal. In other words, the transition takes place when the input states (one or more, depending upon the model) are active and when a condition corresponding to an input or output of the terminal to/from the user occurs. In the case in which there is only one input state, only that state must be active in order for the transition to take place. Note that two transitions can share the same state, for example the input state (or states) or even both, that is, both the input state (states) and the output state (states). The transition is activated for example when the user presses the respective button on the remote control (that is, associated with the transition by means of the model) and thus sends a user input signal to the terminal. At this point, the transition is triggered, that is, the output state of transition now becomes active. Consequently, a user output signal can be emitted from the terminal.

In step S130, the method generates an event corresponding to at least one of the triggered transitions. The event does not necessarily have to be created for all the transitions in the model, but at least for one. For example, a filter or a criterion can be set so that only some of the transitions that have taken place will generate an event, or for example so that other events will be ignored (for example, preventing them from being saved or transmitted; see further details below) even if they have been generated. The event can consist of a data packet sent from the terminal to a server, which can process it immediately or store it. The data saving process can take place together with other events in a log. In one alternative, the event and/or log can be managed from the terminal, for example they can be saved and processed locally (totally or in part), or saved and sent at least partially to a server later. The log consists of a data file or structure that contains the event or events that have been recorded. The event-related data can include one of the following: the time at which the transition took place, the transition ID, initial state, final state, etc.

It is therefore possible to perform accurate monitoring of the terminal, given that the operating states and the transitions thereof can be monitored exactly. Moreover, the method is particularly efficient, given that not all of the operating states of the machine need to be modelled. Resources can thus be reduced, for example as regards computational and storage resources and/or resources for transmitting information in the amounts needed to manage the states of interest and possibly those other transitional states required to reach a state of interest. Furthermore, operation of the model results in fast processing even of enormous amounts of data (consider a terminal in which a large number of states need to be monitored) without having to apply complex techniques of analysis (for example in terms of computational and/or storage resources) to data collected in another manner.

According to one modification of the first embodiment, the method can further comprise the step of modifying a configuration of the terminal or of the network based on the event generated. Modifying a configuration of the terminal comprises modification of the state machine model (if present) for operation of the terminal, that is, the state machine model (if present) utilized by the terminal for controlling it. Moreover, it can comprise modifying terminal software, and/or a terminal software module, and/or the triggering of an operating mode (among multiple available modes) of the terminal, etc.

The modification of the configuration of the terminal can comprise, for example, the reconfiguration of some EPG areas. For example, EPG areas that monitoring of the terminal reveals to be frequently used can be moved to areas that are more accessible compared to current areas held to be difficult to reach. In other words, the state machine model for controlling the terminal can be reconfigured and made more efficient, or the software or part of the software (e.g. modules) can be made more efficient. The detection process in this sense can be obtained owing to the generation of a log, in which the transitions relative to the activation of an operating state of the terminal corresponding to the displayed area of a given EPG area are reported. When the number of corresponding log events exceeds for example a given threshold, be it absolute or relative with respect to other operating states, reconfiguration of the terminal can be carried out (for example by means of manual or automatic updating of the EPG).

As a result, it is thus possible to make the configuration of the system more flexible, that is, the configuration of the terminal and/or the network, and as a direct result, the monitoring of the terminal as well. For example, the state machine model used by the terminal for controlling the terminal, the software thereof or parts of the software (e.g. modules) can be made more efficient.

The method can further comprise the step of generating a log of events comprising at least two generated events, and the modification of a configuration comprises modification of a configuration based on the log. In other words, if more than one event is generated, the set of events can form a log. In this case, modification of the configuration of the terminal or of the network is carried out based on the log of generated events. In this manner, modification of the above-mentioned configuration can be carried out based not only on a single event, but on a number of events, that is, based on an analysis of the number of events contained in the log. Any type of analysis, such as statistical or qualitative analysis, of the log can be carried out for the purposes of modifying the configuration of the terminal and/or network.

The log of events can comprise events corresponding to the selection of at least two interactive applications and the method can comprise variation of the bandwidth assigned to the at least two interactive applications based on the log of events. An interactive application is understood as an application present in the terminal or downloadable online and that enables interaction with the user. For example, the system can analyze use of the interactive applications by users and allocate a percentage of the band proportionally to the frequency of use of the interactive application and/or based on the time slots with greater utilization of a given interactive application. As a result, the available band (for transmission of the applications and/or of data utilized by them) is managed in a more efficient manner.

According to a variant of the first embodiment, at least two operating conditions of the terminal can comprise respective viewing conditions on a screen connected to the terminal and the log of events can comprise events corresponding to the selection of one condition among said viewing conditions. The method can also comprise the step of varying these two viewing conditions. A viewing condition is understood as an operating condition of the machine that brings about a given display on a screen connected to or integrated with the terminal. For example, the two viewing conditions can correspond to or bring about the display of two respective different EPG pages. Therefore, and by way of illustration, according to this variant, two screen pages associated with two keys on the remote control can be inverted when it is found that one screen page is preferred over another by a given user or by a number of users. In other words, each one of the two operating conditions S1 and S2 of the terminal is such as to result in the displaying of a respective screen page A and B; By monitoring the two conditions S1 and S2, the same two conditions S1 and S2 can be reconfigured so that each one displays the respective screen page B and A (that is, inverting the previous display) or associating the two conditions with two new screen pages C and D. Therefore, in the case of a television decoder, screen pages such as those of an application or of the EPG can be reprogrammed based on the information detected through monitoring. In one example, categories/screen pages of greater interest can be moved to positions that are simpler to reach (e.g. in the first positions of the EPG), and categories that do not reveal an interest can be moved to the back or eliminated. The viewing condition thus corresponds to a configuration (hardware and/or software) of the terminal that is capable of generating a given display according to the operation of the operative and/or applications thereof.

According to a variant of the first embodiment, the state machine model is reset upon the occurrence of an anomalous situation. Resetting implies that the state machine model is reconfigured so that all active states are made inactive and only some predetermined states are made active. For example, this corresponds to a situation in which the machine is awaiting an event or a combination of events that is known and reproduced by the model selected. The anomalous condition can comprise the following situations: different keys are pressed for a certain amount of time without any transition being triggered, time limit of a timer reached while a given key or combination of keys is pressed, etc.

As mentioned above, the state machine model can comprise a Petri net or a directed graph according to an optional configuration of the first embodiment. A Petri net is a state machine model that allows to describe the technical behaviour of finite state systems precisely and unambiguously. More specifically, the Petri net is a type of directed bipartite graph with two types of nodes, states (places) and transitions, connected by directed arcs. An arc can connect only nodes of different types and therefore states with transitions and vice versa. The states are represented graphically by circles and the transitions by rectangles. Each state can contain one or more tokens, which are represented by dots. A state containing at least one token represents an active state. A state that does not contain any tokens represents an inactive state. The states preceding a transition are input states of said transition and the states subsequent to a transition are output states of said transition. A transition is enabled to trigger when the input states relative to this transition are found in the active state (that is, they contain at least one token), upon the at least one signal among a user input signal and a user output signal of the terminal.

According to another embodiment, the present invention further comprises a program for monitoring at least one terminal suitable for receiving signals from a communication network. When the program is run on a computer, said program is apt for executing one or more of the steps according to the method described hereinabove or one of the variants thereof. The computer on which this program can be run is understood as any system capable of processing signals and instructions, the system being realized in one or several interconnected units, capable of executing programmed instructions or instructions apt for executing the steps described hereinabove.

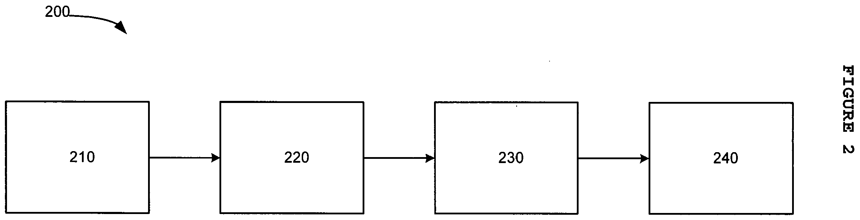

A second embodiment shall now be described below with reference to Figure 2, in which an entity 200 for monitoring at least one terminal suitable for receiving signals from a communication network is represented. An entity can be implemented in just one device or in multiple devices. In particular, the entity 200 can be represented by a device separate from the terminal and not connected with the terminal. In this case, it suffices that the entity 200 be capable of receiving user inputs independently of the terminal, and/or that it be capable of detecting terminal outputs to the user independently. The user input and output signals can be intercepted by the entity without interfering in any manner with the internal operation of the terminal, that is, the reception of signals and the transmission of signals by the terminal remain unchanged or they are not influenced by the presence of the entity. For example, in the case in which the terminal consists of a decoder operated using a remote control, the entity comprises a unit capable of receiving the signals from the remote control and it shall be arranged preferably in proximity to the decoder so as to permit proper reception of the signals from the remote control; moreover, the entity can comprise a unit for detecting the output state of the decoder, for example the switching on of the LEDs and the audio level being reproduced. In this variant, the operation of the entity can be decoupled from the internal operation of the decoder. The entity thus has operation decoupled from operation of the terminal. The term "decoupled" indicates that the operation of the entity does not interfere with the internal operation of the terminal, that is, it makes it unvaried. For example, as discussed above, the state machine model implemented by the entity is a model that is separate at least logically (and also physically in some embodiments) from the terminal and that can reproduce operation of the terminal and therefore of the state machine followed by the terminal in its operation. However, the entity can be an integral part of the decoder or be connected to it, so as to receive the user inputs/outputs by means of the decoder software or directly by means of hardware connections without having to be processed by the decoder software, in which case the entity 200 can be decoupled from the software of the decoder 200.Incidentally, it should be noted that the same considerations apply to the method and to the program described above, that is, they can be implemented in an entity as described hereinabove. Therefore, the steps of the method are carried out independently of the actions carried out in the terminal. All of the considerations expressed above with reference to the first embodiment generally also hold hereunder (and thus with reference also to other embodiments or examples) and are therefore not repeated. The entity 200 of Figure 2 comprises first association means 210, second association means 220, transition means 230 and generating means 240.

The first association means 210 associates at least one portion of operating conditions of the terminal with a state machine model comprising a plurality of states and a plurality of transitions between said plurality of states. As described above, one or more states preceding one of said plurality of transitions are input states of said transition and a state subsequent to said transition is an output state of said transition. Each one of said input states can assume an active or inactive state.

The second association means 220 associates at least one among a user input signal and a user output signal of said terminal with each one of said plurality of transitions.

The transition means 230 triggers one of said plurality of transitions when the input states relative to this transition are in the active state, upon the at least one signal among a user input signal and a user output signal of said terminal.

The generating means 240 generates an event corresponding to at least one of the triggered transitions.

According to a variant of the second embodiment, the entity can further comprise modification means. The modification means modifies a configuration of the terminal or of the network, based on the event generated.

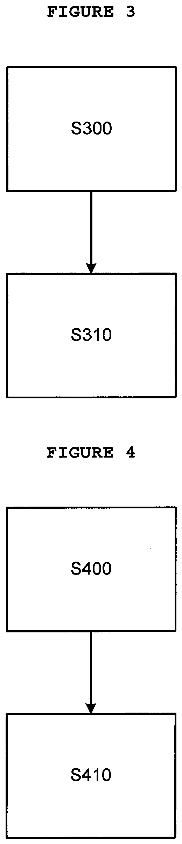

Figure 3 illustrates a third embodiment relative to a method for allocating a band in a communication system comprising a communication network and a terminal suitable for receiving signals from the communication network. In a step S300, a plurality of events of at least one terminal is detected. Each one of said plurality of events corresponds to at least one among a user input signal and a user output signal of said at least one terminal. As described previously, this user input signal can be represented by a signal generated when the user presses a button on a remote control or a key available on the terminal, for example on the front panel of a decoder. The user output signal can comprise a LED signal on the front panel of the decoder or displayed on a smart remote control, for example a tablet, or on the screen. In a subsequent step 310, a configuration of the terminal or of the network is modified based on the event generated. The modification of the configuration of the terminal can comprise the reconfiguration of some EPG areas.

In a variant of this embodiment, the plurality of events can comprise events corresponding to the selection of at least two interactive applications. In this case, the method according to the third embodiment can further comprise the step of varying the bandwidth assigned to said at least two interactive applications based on the plurality of events.

In a variant of the this embodiment, at least two events can be relative to respective viewing conditions on a screen connected to the terminal and the plurality of events can comprise events corresponding to the selection of one condition among said viewing conditions. In this case, the method according to the third embodiment can further comprise the step of varying these two viewing conditions.

Figure 4 illustrates a fourth embodiment relative to a method for modifying a configuration of at least one terminal that is suitable for receiving signals from a communication network. In step S400, a plurality of events of said at least one terminal is detected. Each one of said plurality of events corresponds to the selection of an operating condition of the terminal. In a subsequent step S410, at least two operating conditions of the terminal are varied, such conditions comprise respective viewing conditions on a screen connected to the terminal.

In the third and fourth embodiments, as well as in the respective variants, the plurality of events can be generated using the method and the variants thereof according to the first embodiment. However, this is not necessary because the events could be generated using other methods, for example by integrating triggers in the software and/or hardware of the terminal to generate an event upon a given user input and/or output.

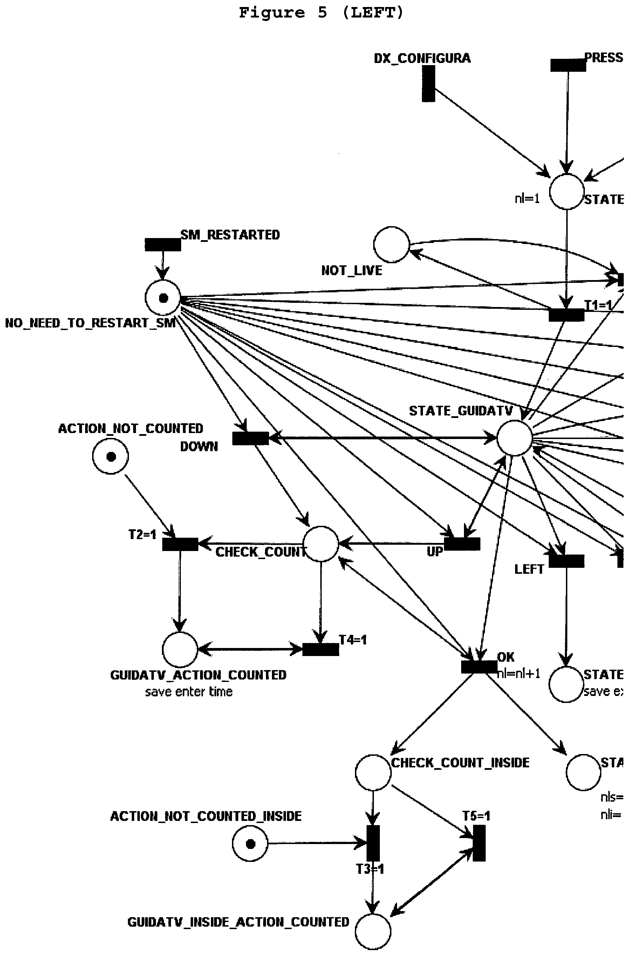

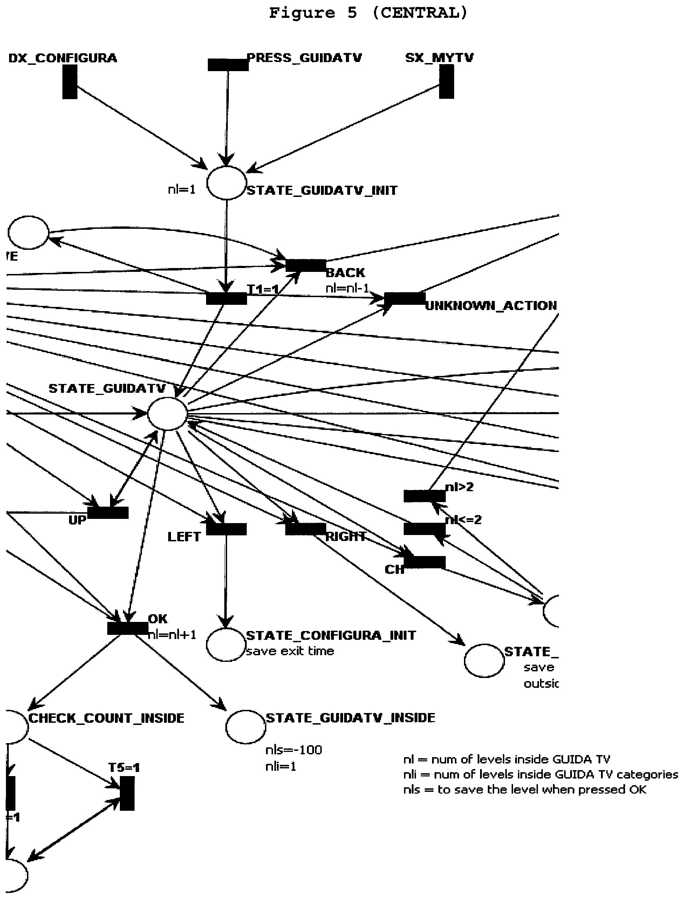

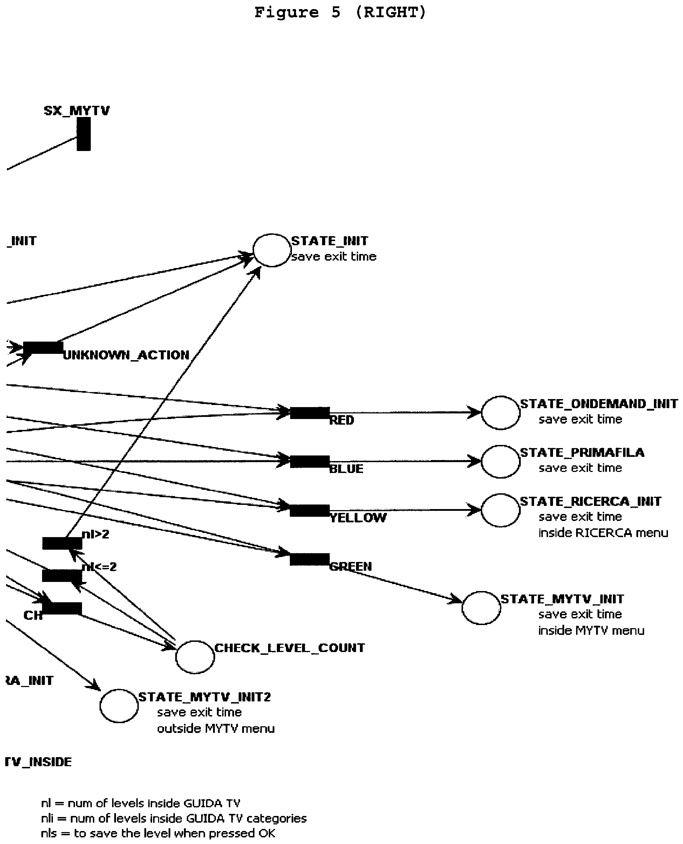

Figure 5 shows an example of operation of a model of a Petri net relative to the present invention. Figure 5 shows a distribution of tokens corresponding to an initial level of the Petri net, for example a distribution of tokens that is obtained when the terminal is switched on. In the case in which, after some transitions, two tokens are found in the states NO_NEED_TO_RESTART_SM and STATE_GUIDATV, respectively, and the RED button is pressed by the user, the RED transition is triggered and the state STATE_ONDEMAND_INIT becomes active. When the state STATE_ONDEMAND_INIT or one of the other states shown on the right-hand side of Figure 5 becomes active (STATE_PRIMAFILA, STATE_RICERCA_INIT, STATE_MYTV_INIT), one passes to a lower level of this Petri net model. In fact, the terminal model can comprise a number of Petri nets, which can be hierarchically structured for example. For example, the lower level net corresponds to the model of other operating states of the decoder (e.g. relative to a different part of the EPG, or of a different operating mode of the terminal). Likewise, there will be states in the lower level net through which the model returns to the net appearing in Figure 5. In the case of resetting, the model can be designed to return to a predetermined known combination of states of the higher level net.

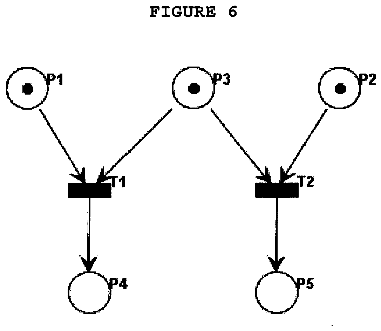

Figure 6 shows an example of transitioning between states in a Petri net model, in which two transitions share an input state. In this example, states PI, P2 and P3 are active input states. If the key T1 is pressed, the transition T1 can be triggered and the output state P4 becomes active. If the key T2 is pressed instead, the output state P5 becomes active.

One technical advantage of the present invention consists in efficient monitoring of the operation of a terminal suitable for receiving signals from a communication network. Interaction of the user with the terminal can also be monitored. In the case of a decoder for television signals, a map of operating conditions can thus be created, corresponding to the navigation paths of the user within the EPG. Therefore, several EPG areas can be reconfigured based on interaction of the user with the terminal and in such a manner that the EPG proves to be usable for example in a more efficient manner. According to an additional example of a television decoder, in the case in which this decoder is connected to the Internet, it is possible to position some EPG sections, for example sections of an "ON DEMAND" catalogue, based on the user's use of it, for example, in the "browse catalogue" mode for users who access some areas, but do not download. The "On Demand" catalogue is an example serving to offer a variety of programmes (films, entertainment shows, sports events, etc.) that can be selected from a list and downloaded for example on a Hard Disk using the Internet. When a percentage of the film has been downloaded, the user can start viewing it. For example, if the monitoring process shows that an item in the catalogue is reached more frequently by one or more users, that item can be moved to a part of the EPG that can be accessed more easily. Therefore, it is possible to achieve greater efficiency in the use of the terminal and decrease the workload of the terminal and the system.

Furthermore, the transmission band (e.g. satellite transmission band or the band that is more or less guaranteed on a fixed or wireless communication network etc.) allocated to the interactive applications can be redistributed efficiently. The system can analyze use of the interactive applications by users and allocate a percentage of the band proportionally to the frequency of use of the interactive application. As a result, the available band is managed more efficiently.

In the embodiments described above, some of the data utilized for the analysis can consist of the identification of a key that is pressed by the user, the channel to which the user has tuned prior to pressing a given key, etc. By analysing these data for a significant period of time, it is possible to create, using the example of a television decoder, a complete map of the user experience, the result of which lists the user's navigation paths within the EPG, for example the path within the content areas, including television programming, the configuration menu, the content recording area, etc. These areas can be nested within a number of levels or positions on parallel paths.

As exemplified in the embodiments, the proposed model can be protected with a conservative approach in the identification of the states, in the sense that it is configured to return to an initial state if the path has not been determined, for example in the case of inappropriate sequences of keys being pressed by mistake by the user.

As explained above, it is also possible to monitor the terminal and interaction of the user with the terminal efficiently. Owing to the state machine model, monitoring can be carried out in an accurate and non-invasive manner, that is, without having to modify the terminal software. Moreover, owing to the selection of the subset of states to be monitored, it is possible to achieve a fast monitoring process, and in which few data need to be stored and subjected to subsequent analyses, for example statistical or qualitative analyses. Therefore, more efficient and effective monitoring can be achieved. Furthermore, in the case in which the model is executed and processed locally on the user's premises, it will not be necessary to transmit a large amount of data, but only the results of the monitoring process. As a monitoring application, which is not necessarily based on the model of the first embodiment, it is possible to modify the interaction interface, for example to modify the position of some EPG areas based on the number of accesses to the area and on the navigation path chosen by the user to access the area (shortest path, longest path). In addition to this, several sections of the "On Demand" catalogue can be positioned based on use in the "browse catalogue" mode, by users who access some areas, but do not download. The invention also allows for more efficient redistribution of the satellite transmission band allocated to interactive applications. As a result, it is possible to decrease the workload of the terminal and the communication network. Additionally, malfunctioning related to operation of the terminal can be identified.

The entity 200 described in the description hereinabove can be replaced with a monitoring device and equivalents thereof. Moreover, a first association means has been described, but it can be replaced with a first processing unit and equivalents thereof. The same holds for the second association means, the transition means and the generating means, which can be replaced with a second, a third or fourth processing unit and equivalents thereof, taking note of the fact that the various processing units can be represented by a single processing unit.
Many of the embodiments and examples have been explained with reference to steps of methods or processes. However, the description provided can also be implemented in a program to be run on a computing entity (including distributed computing) or in an entity having suitably configured means. As illustrated above, the entity can be implemented in a single device, via HW/SW or a combination of the latter, or in multiple interconnected units or devices (HW, SW or a combination thereof, in this case as well). Naturally, the description set forth hereinabove concerning embodiments and examples that apply the principles recognized by the inventors, is provided solely by way of example of these principles and therefore it should not be understood as a limitation of the scope of the invention claimed herein.

## Claims

1. A method for monitoring, through an entity, at least one terminal suitable for receiving signals from a communication network, the entity having operation decoupled from operation of said at least one terminal and being configured, independently of said at least one terminal, to receive a user input signal of said at least one terminal and to detect a user output signal of said at least one terminal, the method comprising the steps, performed by said entity, of:
- associating (S100) at least one portion of operating conditions of the terminal with a state machine model comprising a plurality of states and a plurality of transitions between said plurality of states, where one or more states preceding one of said plurality of transitions are input states of said transition and a state subsequent to said transition is an output state of said transition, wherein each one of said input states is such as to assume an active or inactive state;
- associating (S110) at least one among the user input signal and the user output signal of said terminal with each one of said plurality of transitions;
- triggering (S120) one of said plurality of transitions when the input states relative to this transition are in the active state, in correspondence with at least one among the user input signal and the user output signal of said terminal;
- generating (S130) an event corresponding to at least one of the triggered transitions.

2. The method according to claim 1, this method being carried out by means of an entity having operation decoupled from operation of said terminal and that is suitable, independently of the terminal, for receiving the user input signal of said terminal and for detecting the user output signal of said terminal.

3. The method according to claim 1 or 2, further comprising the step of modifying a configuration of the terminal or of the network, based on the event generated.

4. The method according to one of claims 1 to 3, further comprising generating a log of events comprising at least two generated events, and modifying a configuration comprises modifying a configuration based on the log.

5. The method according to claim 4, wherein the log of events comprises events corresponding to the selection of at least two interactive applications, and further comprising the step of varying the bandwidth assigned to said at least two interactive applications based on the log of events.

6. The method according to one of claims 3 to 5, wherein at least two operating conditions of the terminal comprise respective viewing conditions on a screen connected to the terminal, the log of events comprises events corresponding to the selection of one condition among said viewing conditions, and further comprising the step of varying these two viewing conditions.

7. The method according to one of the preceding claims, wherein the state machine model is reset upon the occurrence of an anomalous situation.

8. The method according to one of the preceding claims, wherein the state machine model comprises a Petri net or a directed graph.

9. A program for monitoring, through an entity, at least one terminal suitable for receiving signals from a communication network, the entity having operation decoupled from operation of said at least one terminal and being configured, independently of said at least one terminal, to receive a user input signal of said at least one terminal and to detect a user output signal of said at least one terminal, the program being arranged for executing, when said program is run on a computer, all the steps according to any one of the method claims 1 to 8.

10. An entity (200) for monitoring at least one terminal suitable for receiving signals from a communication network, the entity having operation decoupled from operation of said at least one terminal and being configured, independently of said at least one terminal, to receive a user input signal of said at least one terminal and to detect a user output signal of said at least one terminal, the entity comprising:
- first association means (210) for associating at least one portion of operating conditions of the terminal with a state machine model comprising a plurality of states and a plurality of transitions between said plurality of states, where one or more states preceding one of said plurality of transitions are input states of said transition and a state subsequent to said transition is an output state of said transition, wherein each one of said input states is such as to assume an active or inactive state;
- second association means (220) for associating at least one among the user input signal and the user output signal of said terminal with each one of said plurality of transitions;
- transition means (230) for triggering one of said plurality of transitions when the input states relative to this transition are in the active state, in correspondence with the at least one among the user input signal and the user output signal of said terminal;
- generating means (240) for generating an event corresponding to at least one of the triggered transitions.

11. The entity according to claim 10, having operation decoupled from operation of said terminal and that is suitable, independently of the terminal, for receiving the user input signal of said terminal and for detecting the user output signal of said terminal.

12. The entity according to claim 10 or 11, further comprising modification means for modifying a configuration of the terminal or of the network based on the event generated.

## Patentansprüche

1. Verfahren zur Überwachung, durch eine Einheit, zumindest eines Endgeräts, das für den Empfang von Signalen von einem Kommunikationsnetzwerk geeignet ist, wobei die Einheit ihren Betrieb vom Betrieb des zumindest einen Endgeräts entkoppelt hat und dazu konfiguriert ist, unabhängig vom zumindest einen Endgerät, ein Benutzereingabesignal vom zumindest einen Endgerät zu empfangen und ein Benutzerausgabesignal vom zumindest einen Endgerät zu detektieren, das Verfahren umfassend die Schritte, durchgeführt durch die Einheit, von:
- Verknüpfen (S100) zumindest eines Teils von Betriebszuständen des Endgeräts mit einem Zustandsmaschinenmodell, das eine Vielzahl von Zuständen und eine Vielzahl von Übergängen zwischen der Vielzahl von Zuständen umfasst, wobei ein oder mehrere Zustände vor einem von der Vielzahl von Übergängen Eingabezustände des Übergangs sind und ein Zustand nach dem Übergang ein Ausgabezustand des Übergangs ist, wobei jeder der Eingabezustände so beschaffen ist, dass er einen aktiven oder inaktiven Zustand annimmt;
- Verknüpfen (S110) zumindest eines unter dem Benutzereingabesignal und dem Benutzerausgabesignal des Endgeräts mit jedem von der Vielzahl von Übergängen;
- Auslösen (S120) eines von der Vielzahl von Übergängen, wenn die Eingabezustände bezüglich dieses Übergangs im aktiven Zustand sind, in Übereinstimmung mit zumindest einem unter dem Benutzereingabesignal und dem Benutzerausgabesignal des Endgeräts;
- Erzeugen (S130) eines Ereignisses entsprechend zumindest einem der ausgelösten Übergänge.

2. Verfahren nach Anspruch 1, wobei dieses Verfahren mittels einer Einheit durchgeführt wird, die ihren Betrieb vom Betrieb des Endgeräts entkoppelt hat und die geeignet ist, unabhängig von dem Endgerät, zum Empfangen des Benutzereingabesignals von dem Endgerät und zum Detektieren des Benutzerausgabesignals von dem Endgerät.

3. Verfahren nach Anspruch 1 oder 2, weiter umfassend den Schritt von Modifizieren einer Konfiguration des Endgeräts oder des Netzwerks basierend auf dem erzeugten Ereignis.

4. Verfahren nach einem der Ansprüche 1 bis 3, weiter umfassend Erzeugen eines Ereignisprotokolls, das zumindest zwei erzeugte Ereignisse umfasst, und Modifizieren einer Konfiguration Modifizieren einer Konfiguration basierend auf dem Protokoll umfasst.

5. Verfahren nach Anspruch 4, wobei das Ereignisprotokoll Ereignisse entsprechend der Auswahl von zumindest zwei interaktiven Anwendungen umfasst und weiter umfassend den Schritt von Verändern der den zumindest zwei interaktiven Anwendungen zugewiesenen Bandbreite basierend auf dem Ereignisprotokoll.

6. Verfahren nach einem der Ansprüche 3 bis 5, wobei zumindest zwei Betriebszustände des Endgeräts entsprechende Betrachtungszustände auf einem mit dem Endgerät verbundenen Bildschirm umfassen, das Ereignisprotokoll Ereignisse entsprechend der Auswahl von einem Zustand unter den Betrachtungszuständen umfasst und weiter umfassend den Schritt von Verändern dieser zwei Betrachtungszustände.

7. Verfahren nach einem der vorstehenden Ansprüche, wobei das Zustandsmaschinenmodell beim Auftreten einer anormalen Situation zurückgesetzt wird.

8. Verfahren nach einem der vorstehenden Ansprüche, wobei das Zustandsmaschinenmodell ein Petri-Netz oder einen gerichteten Graphen umfasst.

9. Programm zur Überwachung, durch eine Einheit, zumindest eines Endgeräts, das für den Empfang von Signalen von einem Kommunikationsnetzwerk geeignet ist, wobei die Einheit ihren Betrieb vom Betrieb des zumindest einen Endgeräts entkoppelt hat und dazu konfiguriert ist, unabhängig vom zumindest einen Endgerät, ein Benutzereingabesignal vom zumindest einen Endgerät zu empfangen und ein Benutzerausgabesignal vom zumindest einen Endgerät zu detektieren, wobei das Programm, wenn das Programm auf einem Computer läuft, zur Ausführung aller Schritte nach einem der Verfahrensansprüche 1 bis 8 eingerichtet ist.

10. Einheit (200) zur Überwachung zumindest eines Endgeräts, das für den Empfang von Signalen von einem Kommunikationsnetzwerk geeignet ist, wobei die Einheit ihren Betrieb vom Betrieb des zumindest einen Endgeräts entkoppelt hat und dazu konfiguriert ist, unabhängig vom zumindest einen Endgerät, ein Benutzereingabesignal vom zumindest einen Endgerät zu empfangen und ein Benutzerausgabesignal vom zumindest einen Endgerät zu detektieren, wobei die Einheit umfasst:
- erste Verknüpfungsmittel (210) zum Verknüpfen zumindest eines Teils von Betriebszuständen des Endgeräts mit einem Zustandsmaschinenmodell, das eine Vielzahl von Zuständen und eine Vielzahl von Übergängen zwischen der Vielzahl von Zuständen umfasst, wobei ein oder eine Vielzahl von Zustände vor einem von der Vielzahl von Übergängen Eingabezustände des Übergangs sind und ein Zustand nach dem Übergang ein Ausgabezustand des Übergangs ist, wobei jeder der Eingabezustände so beschaffen ist, dass er einen aktiven oder inaktiven Zustand annimmt;
- zweite Verknüpfungsmittel (220) zum Verknüpfen zumindest eines unter dem Benutzereingabesignal und dem Benutzerausgabesignal des Endgeräts mit jedem von der Vielzahl von Übergängen;
- Übergangsmittel (230) zum Auslösen eines von der Vielzahl von Übergängen, wenn die Eingabezustände bezüglich dieses Übergangs im aktiven Zustand sind, in Übereinstimmung mit dem zumindest einen unter dem Benutzereingabesignal und dem Benutzerausgabesignal des Endgeräts;
- Erzeugungsmittel (240) zum Erzeugen eines Ereignisses entsprechend zumindest einem der ausgelösten Übergänge.

11. Einheit nach Anspruch 10, die ihren Betrieb vom Betrieb des Endgeräts entkoppelt hat und die geeignet ist, unabhängig von dem Endgerät, zum Empfangen des Benutzereingabesignals von dem Endgerät und zum Detektieren des Benutzerausgabesignals von dem Endgerät.

12. Einheit nach Anspruch 10 oder 11, weiter umfassend Modifizierungsmittel zum Modifizieren einer Konfiguration des Endgeräts oder des Netzwerks basierend auf dem generierten Ereignis.

## Revendications

1. Procédé de surveillance, par le biais d'une entité, d'au moins un terminal approprié pour recevoir des signaux d'un réseau de communication, l'entité ayant un fonctionnement découplé du fonctionnement dudit au moins un terminal et étant configurée, indépendamment dudit au moins un terminal, pour recevoir un signal d'entrée d'utilisateur dudit au moins un terminal et pour détecter un signal de sortie d'utilisateur dudit au moins un terminal, le procédé comprenant les étapes, réalisées par ladite entité, de :
- association (S100) d'au moins une partie de conditions de fonctionnement du terminal à un modèle de machine d'états comprenant une pluralité d'états et une pluralité de transitions entre ladite pluralité d'états, où un ou plusieurs états précédant une de ladite pluralité de transitions sont des états d'entrée de ladite transition et un état subséquent à ladite transition est un état de sortie de ladite transition, dans lequel chacun desdits états d'entrée est tel qu'il assume un état actif ou inactif ;
- association (S110) d'au moins un parmi le signal d'entrée d'utilisateur et le signal de sortie d'utilisateur dudit terminal à chacune de ladite pluralité de transitions ;
- déclenchement (S120) d'une de ladite pluralité de transitions lorsque les états d'entrée relatifs à cette transition sont dans l'état actif, en correspondance avec au moins un parmi le signal d'entrée d'utilisateur et le signal de sortie d'utilisateur dudit terminal ;
- génération (S130) d'un événement correspondant à au moins une des transitions déclenchées.

2. Procédé selon la revendication 1, ce procédé étant exécuté au moyen d'une entité ayant un fonctionnement découplé du fonctionnement dudit terminal et qui est appropriée, indépendamment du terminal, pour recevoir le signal d'entrée d'utilisateur dudit terminal et pour détecter le signal de sortie d'utilisateur dudit terminal.

3. Procédé selon la revendication 1 ou 2, comprenant en outre l'étape de modification d'une configuration du terminal ou du réseau, sur la base de l'événement généré.

4. Procédé selon la revendication 1 à 3, comprenant en outre la génération d'un journal d'événements comprenant au moins deux événements générés, et la modification d'une configuration comprend la modification d'une configuration sur la base du journal.

5. Procédé selon la revendication 4, dans lequel le journal d'événements comprend des événements correspondant à la sélection d'au moins deux applications interactives, et comprenant en outre l'étape de variation de la largeur de bande attribuée auxdites au moins deux applications interactives sur la base du journal d'événements.

6. Procédé selon l'une quelconque des revendications 3 à 5, dans lequel au moins deux conditions de fonctionnement du terminal comprennent des conditions de visualisation respectives sur un écran connecté au terminal, le journal d'événements comprend des événements correspondant à la sélection d'une condition parmi lesdites conditions de visualisation, et comprenant en outre l'étape de variation de ces deux conditions de visualisation.

7. Procédé selon l'une quelconque des revendications précédentes, dans lequel le modèle de machine d'états est réinitialisé lors de l'apparition d'une situation anormale.

8. Procédé selon l'une quelconque des revendications précédentes, dans lequel le modèle de machine d'états comprend un réseau de Petri ou un graphe dirigé.

9. Programme de surveillance, par le biais d'une entité, d'au moins un terminal approprié pour recevoir des signaux d'un réseau de communication, l'entité ayant un fonctionnement découplé du fonctionnement dudit au moins un terminal et étant configurée, indépendamment dudit au moins un terminal, pour recevoir un signal d'entrée d'utilisateur dudit au moins un terminal et pour détecter un signal de sortie d'utilisateur dudit au moins un terminal, le programme étant agencé pour exécuter, lorsque ledit programme se déroule sur un ordinateur, toutes les étapes selon l'une quelconque des revendications de procédé 1 à 8.

10. Entité (200) de surveillance d'au moins un terminal approprié pour recevoir des signaux depuis un réseau de communication, l'entité ayant un fonctionnement découplé du fonctionnement dudit au moins un terminal et étant configurée, indépendamment dudit au moins un terminal, pour recevoir un signal d'entrée d'utilisateur dudit au moins un terminal et pour détecter un signal de sortie d'utilisateur dudit au moins un terminal, l'entité comprenant :
- un premier moyen d'association (210) pour associer au moins une partie de conditions de fonctionnement du terminal à un modèle de machine d'états comprenant une pluralité d'états et une pluralité de transitions entre ladite pluralité d'états, où un ou plusieurs états précédant une de ladite pluralité de transitions sont des états d'entrée de ladite transition et un état subséquent à ladite transition est un état de sortie de ladite transition, dans lequel chacun desdits états d'entrée est tel qu'il assume un état actif ou inactif ;
- un second moyen d'association (220) pour associer au moins un parmi le signal d'entrée d'utilisateur et le signal de sortie d'utilisateur dudit terminal à l'une de ladite pluralité de transitions ;
- un moyen de transition (230) pour déclencher une de ladite pluralité de transitions lorsque les états d'entrée relatifs à cette transition sont dans l'état actif, en correspondance avec l'au moins un parmi le signal d'entrée d'utilisateur et le signal de sortie d'utilisateur dudit terminal ;
- un moyen de génération (240) pour générer un événement correspondant à au moins une des transitions déclenchées.

11. Entité selon la revendication 10, ayant un fonctionnement découplé du fonctionnement dudit terminal et qui est appropriée, indépendamment du terminal, pour recevoir le signal d'entrée d'utilisateur dudit terminal et pour détecter le signal de sortie d'utilisateur dudit terminal.

12. Entité selon la revendication 10 ou 11, comprenant en outre un moyen de modification pour modifier une configuration du terminal ou du réseau sur la base de l'événement généré.
